# FASCICULE DE BREVET EUROPEEN

(11) **EP 0 462 895 B1**
(45) Date de publication et mention de la délivrance du brevet: **02.03.1994**
(21) Numéro de dépôt: 91401654.8
(22) Date de dépôt: 19.06.1991
(51) Int. Cl.: G01P 1/04

(54) **Embout de flexible d'entrainement destiné à être fixé sur un indicateur de vitesse**
Kupplung für einen biegsamen Antrieb eines Kraftfahrzeuggeschwindigkeitsanzeigers
Flexible drive connector for a vehicle speed indicator

(30) Priorité: 19.06.1990 FR 9007653
(43) Date de publication de la demande: 27.12.1991
(73) Titulaire: JAEGER, F-92303 Levallois-Perret (FR)
(72) Inventeur: Jaunet, Jean-Claude, F-91370 Verrières le Buisson (FR); Drablier, Geneviève, F-92800 Puteaux (FR)
(74) Mandataire: Martin, Jean-Jacques

(56) Documents cités:
- EP-A- 0 064 767
- FR-A- 2 577 678
- PATENT ABSTRACTS OF JAPAN, vol. 8, no. 125 (P-279)[1562], 12 juin 1984; & JP-A-59 28 665

## Description

La présente invention concerne le domaine des embouts de flexibles d'entraînement destinés à être fixés sur les prises de mouvement d'indicateurs de vitesse.

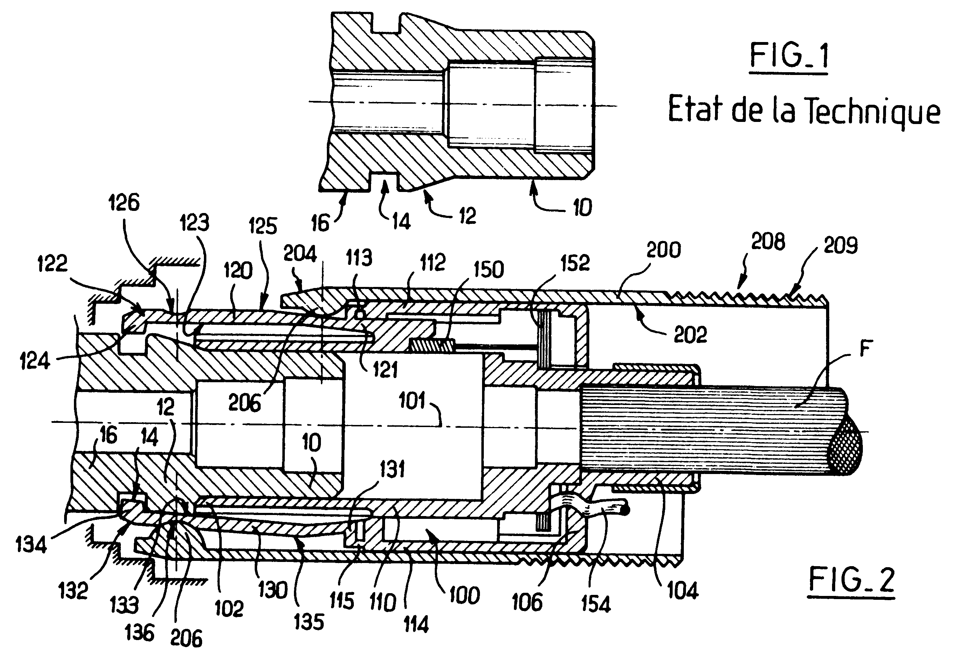

Les prises de mouvement d'indicateurs de vitesse comprennent généralement, pour la réception des embouts de flexibles d'entraînement, un canon solidaire du boîtier logeant l'indicateur de vitesse et qui comporte de son extrémité libre vers ledit boîtier, comme représenté en coupe axiale sur la figure 1 annexée : un fût cylindrique de révolution 10, une portion tronconique 12 divergente vers le boîtier, une gorge 14 de section droite rectangulaire et un second fût cylindrique de révolution 16.

Ces prises de mouvement sont par exemple définies par la norme française NF R 14-216.

La gorge 14 permet la fixation mécanique d'un embout de flexible sur le canon.

Diverses structures d'embouts de flexible ont été proposées à cette fin. Un exemple est révélé dans EP-A-64767.

La Demanderesse a en particulier commercialisé depuis plusieurs années un embout de flexible comprenant un boîtier muni à son extrémité avant d'un anneau de verrouillage. Cet anneau de verrouillage est cylindrique de révolution au repos. Il est relié au boîtier de l'embout par deux languettes longitudinales. L'anneau de verrouillage est muni sur sa surface interne de deux dents en saillie, diamétralement opposées, destinées à être engagées dans la gorge 14 du canon de la prise de mouvement.

Le verrouillage est obtenu par simple enfoncement de l'embout de flexible sur la prise de mouvement. Au cours de cet enfoncement, l'anneau de verrouillage se déforme élastiquement et tend à s'ovaliser, lorsque les dents se déplacent sur la portion tronconique 12. L'anneau de verrouillage recouvre sa forme cylindrique lorsque les dents de verrouillage tombent dans la gorge 14.

Lorsqu'un déverrouillage est rendu nécessaire par exemple lors d'une opération de réparation, l'opérateur agit manuellement sur l'anneau pour déformer à nouveau celui-ci de sorte que les dents de déverrouillage sortent de la gorge 14.

Ces structures d'embouts de flexible connus ont déjà rendu de grands services.

La présente invention se propose cependant de perfectionner les dispositifs connus.

Un but principal de la présente invention est de proposer une nouvelle structure d'embout de flexible permettant un déverrouillage plus facile.

Un but auxiliaire de la présente invention est de proposer une nouvelle structure d'embout de flexible permettant un déverrouillage à distance, c'est-à-dire permettant un déverrouillage de l'embout de flexible sans que l'opérateur ait directement accès à la zone de verrouillage de l'embout de flexible placée en regard de la gorge ménagée dans le canon de la prise de mouvement.

Ces buts sont atteints selon la présente invention grâce à un embout de flexible comprenant un boîtier pourvu d'au moins une languette élastique longitudinale munie d'une dent de verrouillage en saillie à son extrémité libre, apte à pénétrer dans la gorge du canon de la prise de mouvement, ladite languette maintenant toutefois au repos ladite dent à l'extérieur de la gorge, et un fourreau conçu pour être placé sur le boîtier et muni d'au moins un brossage sur sa surface interne, apte à solliciter ladite languette en rapprochement de l'axe du canon lorsque le fourreau est engagé sur le boîtier, afin d'introduire la dent de verrouillage dans la gorge.

Selon une autre caractéristique préférentielle de la présente invention, il est prévu une pluralité de languettes à dent de verrouillage sur le boîtier d'embout de flexible, équi-réparties de l'axe de celui-ci.

D'autres caractéristiques, buts et avantages de la présente invention apparaîtront à la lecture de la description détaillée qui va suivre, et en regard des dessins annexés, donnés à titre d'exemple non limitatif et sur lesquels :
- la figure 1 précédemment décrite représente une vue schématique en coupe axiale d'un canon de prise de mouvement d'indicateur de vitesse connu, et
- la figure 2 représente une vue schématique en coupe axiale d'un embout de flexible d'entraînement conforme à la présente invention, plus précisément la demi-vue supérieure de la figure 2 représente une vue de l'embout de flexible conforme à la présente invention en position déverrouillée tandis que la demi-vue inférieure de la même figure 2 représente le même embout en position verrouillée.

On retrouve sur la figure 2 annexée un canon de prise de mouvement d'indicateur de vitesse comprenant de façon connue en soi, de son extrémité libre vers le boîtier d'indicateur : un fût cylindrique de révolution 10, une portion tronconique 12, une gorge 14 et un second fût cylindrique de révolution 16.

On aperçoit de plus sur la figure 2 annexée un embout de flexible conforme à la présente invention comprenant essentiellement un boîtier 100 et un fourreau 200.

Le boîtier 100 peut faire l'objet de nombreux modes de réalisation.

De préférence, le boîtier 100 est muni à son extrémité avant d'une structure annulaire 102 apte à venir en appui contre la portion tronconique 12 du canon pour servir de butée axiale au boîtier et définir avec précision la position axiale de l'embout de flexible par rapport à la prise de mouvement de l'indicateur de vitesse.

L'extrémité arrière du boîtier 100 est quant à elle munie d'un fût 104 conçu pour recevoir la gaine du flexible.

Cette gaine du flexible est représentée schématiquement sous la référence F sur la figure 2.

Le flexible et la gaine de flexible peuvent être formés de toutes structures connues de l'homme de l'art.

Le boîtier 100 peut loger ou non un capteur de vitesse, c'est-à-dire un capteur apte à générer un signal électrique de fréquence proportionnelle à la vitesse de rotation du flexible.

Un tel capteur de vitesse peut comprendre de façon connue en soi un premier élément de transduction porté par le flexible, par exemple un aimant et un deuxième élément de transduction porté fixe par le boîtier 100, tel que par exemple une sonde à effet Hall.

Sur la figure 2 annexée, une telle sonde à effet Hall est représentée schématiquement sous la référence 150. Cette sonde à effet Hall 150 est portée par un circuit imprimé 152. Selon la représentation de la figure 2, le circuit imprimé 152 a la forme d'une couronne centrée sur l'axe 101 du boîtier et portée sur l'arrière du boîtier. Le circuit imprimé 152 est relié à un circuit d'exploitation extérieur par des liaisons filaires 154 traversant une paroi arrière 106 du boîtier.

Selon la représentation donnée sur la figure 2, le circuit imprimé 152 s'étend transversalement à l'axe 101 du boîtier.

On peut bien entendu envisager de placer le circuit imprimé 152 dans le boîtier 100 parallèlement à l'axe 101.

Le boîtier 100 est de préférence réalisé d'une pièce, par exemple par moulage de matière plastique. Cependant de préférence le boîtier 100 est pourvu au moulage d'au moins une coquille articulée sur le corps de base 110 du boîtier par des zones de plus faibles sections. On a ainsi représenté sur la figure 2 deux coquilles 112, 114 venues de moulage avec le corps de base 110 et articulée sur celui-ci autour de zones de faibles sections 113, 115. A la sortie du moule, les coquilles 112, 114 s'étendent généralement transversalement à l'axe 101. Elles peuvent être repliées parallèlement à l'axe 101 par pliage des zones de faiblesse 113, 115. Les coquilles 112, 114 sont verrouillées dans cette position par encliquetage entre elles ou encliquetage sur le corps de base 110. L'utilisation de telles coquilles 112, 114 permet de faciliter l'assemblage du capteur de vitesse 150, 152. L'utilisation de telles coquilles articulées 112, 114 étant connue de l'homme de l'art ne sera pas décrite plus en détail par la suite.

Selon le mode de réalisation particulier représenté sur la figure 2, le boîtier 100 est muni en outre de deux languettes 120, 130 diamétralement opposées. Les languettes 120, 130 s'étendent longitudinalement, c'est-à-dire parallèlement à l'axe 101. Elles sont prévues sur l'extérieur du corps de base 110. Les languettes 120, 130 se raccordent sur le corps de base 110 sensiblement à mi-longueur de celui-ci au niveau de zones référencées respectivement 121, 131. Les languettes 120, 130 s'étendent ainsi en direction du boîtier d'indicateur de vitesse. Chacune des languettes 120, 130 est munie au niveau de son extrémité libre 122, 132 opposée à la zone de raccordement 121, 131, et sur sa surface interne 123, 133, d'une denture 124, 134. Les dentures 124, 134 sont ainsi dirigées vers l'axe 101 du boîtier. La longueur des languettes 120, 130 est telle que lorsque l'extrémité avant 102 du boîtier 100 vient en butée axiale contre la portion tronconique 12 du canon, les dents 124, 134 sont placées en regard de la gorge 14. En outre la section droite des dents 124, 134 est de préférence sensiblement complémentaire de la section droite de la gorge 14.

Toutefois, comme représenté sur la demi-vue supérieure de la figure 2, en position de repos, les languettes 120, 130 sont conçues pour maintenir les dents de verrouillage 124, 134 sur l'extérieur de la gorge 14. Dans cette position, le boîtier 100 n'est par conséquent pas verrouillé sur le canon de la prise de mouvement de l'indicateur de vitesse. Par ailleurs, de préférence, les surfaces extérieures 125, 135 des languettes divergent, au moins sur une partie de leur longueur par rapport à l'axe 101 en direction de son extrémité libre 122, 132.

Le fourreau de verrouillage 200 est sensiblement cylindrique centré sur l'axe 101. Il est conçu pour être placé sur le boîtier 100. Pour cela, la surface cylindrique interne 202 du fourreau 200 doit être complémentaire de l'enveloppe externe du boîtier 100.

Le fourreau 100 est muni au niveau de son extrémité avant 204 et sur sa surface interne de bossages 206 aptes à solliciter les languettes 120, 130 en rapprochement de l'axe 101 lorsque le fourreau 200 est engagé totalement sur le boîtier 100. Cet engagement permet d'introduire comme représenté sur la demi-vue inférieure de la figure 2 les dents de verrouillage 124, 134 dans la gorge 14.

Selon la représentation particulière donnée sur la figure 2 annexée les bossages 206 présentent une section droite de géométrie sensiblement hémicirculaire.

On peut ainsi prévoir deux bossages 206 diamétralement opposés coïncidant avec les deux languettes 120, 130 diamétralement opposées sur le boîtier. On peut encore prévoir de réaliser les deux bossages 206 sous forme d'une nervure continue annulaire centrée sur l'axe 101.

De préférence, pour définir une indexation du fourreau 200 par rapport au boîtier 100 et un maintien sûr du fourreau 200 en position de verrouillage sur le boîtier 100, les languettes 120, 130 sont munies sur la surface extérieure 125, 135 et au voisinage de leur extrémité libre de creusures 126, 136 de géométrie complémentaire des bossages 206, aptes à recevoir ceux-ci.

Par ailleurs, de préférence l'extrémité arrière 208 du fourreau de verrouillage 200 est munie sur sa surface extérieure de cannelures 209 permettant de faciliter la préhension du fourreau 200 pour commander celui-ci à translation selon l'axe 101. Bien entendu, la longueur du fourreau 200 est adaptée aux contraintes d'encombrement imposées par le véhicule automobile.

De préférence, le fourreau 200 et le boîtier 100 sont réalisés par moulage de matière plastique telle que par exemple de polyamide.

Le cas échéant, une seule languette de verrouillage 120 peut être prévue sur le boîtier.

Cependant on peut égalemlent prévoir un nombre de languettes de verrouillage supérieur à deux équi-réparties autour de l'axe 101 du boîtier.

Comme représenté sur la demi-vue supérieure de la figure 2 annexée, lorsque le fourreau 200 est placé sur l'extrémité arrière du boîtier 100, les dents de verrouillage 124, 134 prévues sur les languettes 120, 130 sont placées à l'extérieur de la gorge 14. L'embout de flexible est alors déverrouillé.

En revanche, lorsque le fourreau 200 est glissé sur le boîtier 100 comme représenté sur la demi-vue inférieure de la figure 2, les bossages 206 sollicitent les languettes 120, 130 en rapprochement de l'axe 101 et portent les dents de verrouillage 124, 134 dans la gorge 14. L'embout est alors verrouillé sur le canon de l'indicateur de vitesse. Pour déverrouiller l'embout il suffit de retirer le fourreau 200 vers l'arrière. Les languettes 120, 130 reprennent alors leur position de repos comme illustré sur la demi-vue supérieure de la figure 2.

On notera que selon une autre caractéristique préférentielle de la présente invention, le boîtier 100 définit sur l'arrière des languettes 120, 130 une structure de plus grand diamètre délimitant un décrochement dirigé vers l'avant du boîtier 100 et servant de butée axiale aux bossages 206 du fourreau afin de limiter le déplacement du fourreau vers l'arrière. On limite ainsi un désassemblage du fourreau 200 et du boîtier 100.

Bien entendu la présente invention n'est pas limitée au mode de réalisation particulier qui vient d'être décrit mais s'étend à toutes variantes conformes au sujet des revendications.

## Revendications

1. Embout de flexible d'entraînement destiné à être fixé sur une prise de mouvement d'indicateur de vitesse muni d'un canon à gorge comprenant un boîtier (100) pourvu d'au moins une languette élastique (120, 130) longitudinale munie d'une denture de verrouillage (124, 134) en saillie à son extrémité libre, apte à pénétrer dans la gorge (14) du canon de la prise de mouvement, caractérisé par le fait que ladite languette (120, 130) maintient toutefois ladite dent (124, 134) à l'extérieur de la gorge (14) et qu'il comprend un fourreau (200) conçu pour être placé sur le boîtier (100) et muni d'au moins d'un bossage (206) sur sa surface interne, apte à solliciter ladite languette (120, 130) en rapprochement de l'axe (101) du canon lorsque le fourreau (200) est engagé sur le boîtier (100) afin d'introduire la dent de verrouillage (124, 134) dans la gorge (14).

2. Embout selon la revendication 1, caractérisé par le fait que le boîtier (100) comprend une pluralité de languettes (120, 130) à dents de verrouillage (124, 134) équi-réparties autour de l'axe (101) du boîtier.

3. Embout selon l'une des revendications 1 ou 2, caractérisé par le fait que le boîtier (100) est muni de deux languettes (120, 130) diamétralement opposées.

4. Embout selon l'une des revendications 1 à 3, caractérisé par le fait que le bossage prévu sur le fourreau de verrouillage (200) est formé d'une nervure annulaire (206).

5. Embout selon l'une des revendications 1 à 4, caractérisé par le fait que chacune des languettes (120, 130) est munie sur sa surface extérieure et au voisinage de son extrémité libre d'une creusure (126, 136) apte à recevoir le bossage prévu sur le fourreau.

6. Embout selon l'une des revendications 1 à 5, caractérisé par le fait que le boîtier (100) est muni sur l'arrière des languettes (120, 130) d'une structure formant un décrochement servant de butée axiale aux bossages (206).

7. Embout selon l'une des revendications 1 à 6, caractérisé par le fait que le boîtier (100) et le fourreau (200) sont réalisés par moulage de matière plastique.

8. Embout selon l'une des revendications 1 à 7, caractérisé par le fait que le boîtier (100) et le fourreau (200) sont réalisés par moulage en polyamide.

9. Embout selon l'une des revendications 1 à 8, caractérisé par le fait que le boîtier (100) loge un capteur de vitesse (150, 152).

10. Embout selon l'une des revendications 1 à 9, caractérisé par le fait que l'extrémité arrière du fourreau de verrouillage (200) est muni de cannelures (209).

## Patentansprüche

1. Antriebsflexwellenansatz zur Befestigung an einem Bewegungsabgriff eines Geschwindigkeitsanzeigers, der mit einer Kehlbuchse versehen ist, wobei der Ansatz ein Gehäuse (100) aufweist, das mit wenigstens einer elastischen Längszunge (120, 130) ausgestattet ist, die mit einer an ihrem freien Ende vorspringenden Verriegelungsverzahnung (124, 134), die für ein Eindringen in die Kehle (14) der Buchse des Bewegungsabgriffs eingerichtet ist, versehen ist, dadurch gekennzeichnet, daß die Zunge (120, 130) den Zahn (124, 134) indessen außerhalb der Kehle (14) hält, und daß er eine Schiebehülse (200) aufweist, die für ein Anordnen auf dem Gehäuse (100) vorgesehen ist und mit wenigstens einem Buckel (206) auf ihrer Innenfläche versehen ist, der für ein Belasten der Zunge (120, 130) in Annäherung an die Achse (101) , wenn die Schiebehülse (200) auf dem Gehäuse (100) angebracht ist, geeignet ist, um den Verriegelungszahn (124, 134) in die Kehle (14) einzuführen.

2. Ansatz nach Anspruch 1, dadurch gekennzeichnet, daß das Gehäuse (100) eine Anzahl von Zungen (120, 130) mit Verriegelungszähnen (124, 134), die gleichmäßig um die Achse (101) des Gehäuses herum verteilt sind, aufweist.

3. Ansatz nach einem der Ansprüche 1 oder 2, dadurch gekennzeichnet, daß das Gehäuse (100) mit zwei diametral gegenüberliegenden Zungen (120, 130) versehen ist.

4. Ansatz nach einem der Ansprüche 1 bis 3, dadurch gekennzeichnet, daß der auf der Verriegelungsschiebehülse (200) vorgesehene Buckel als ringförmige Rippe (206) ausgebildet ist.

5. Ansatz nach einem der Ansprüche 1 bis 4, dadurch gekennzeichnet, daß jede Zunge (120, 130) auf ihrer Außenseite und im Bereich ihres freien Endes mit einer Einsenkung (126, 136) versehen ist, die zur Aufnahme des auf der Schiebehülse vorgesehenen Buckels geeignet ist.

6. Ansatz nach einem der Ansprüche 1 bis 5, dadurch gekennzeichnet, daß das Gehäuse (100) auf dem hinteren Teil der Zungen (120, 130) mit einem Aufbau versehen ist, der einen Absatz bildet, der als Axialanschlag für die Buckel (206) dient.

7. Ansatz nach einem der Ansprüche 1 bis 6, dadurch gekennzeichnet, daß das Gehäuse (100) und die Schiebehülse (200) als Kunststofformteile verwirklicht sind.

8. Ansatz nach einem der Ansprüche 1 bis 7, dadurch gekennzeichnet, daß das Gehäuse (100) und die Schiebehülse (200) als Polyamidformteile verwirklicht sind.

9. Ansatz nach einem der Ansprüche 1 bis 8, dadurch gekennzeichnet, daß das Gehäuse (100) einen Geschwindigkeitsgeber (150, 152) aufnimmt.

10. Ansatz nach einem der Ansprüche 1 bis 9, dadurch gekennzeichnet, daß das hintere Ende der Verriegelungsschiebehülse (200) mit einer Riffelung (209) versehen ist.

## Claims

1. Connector for a flexible drive cable intended to be fixed to a speedometer movement pick-up provided with a barrel with a recess, comprising a housing (100) with at least one longitudinal elastic tongue (120, 130) provided with a set of locking teeth (124, 134) projecting at its free end, able to enter the recess (14) in the barrel of the movement pick-up, characterised by the fact that the said tongue (120, 130) nevertheless holds the said tooth (124, 134) outside the recess (14) and that it comprises a sheath (200) designed so as to be placed on the housing (100) and provided with at least one protrusion (206) on its internal surface, able to push the said tongue (120, 130) closer to the axis (101) of the barrel when the sheath (200) is engaged on the housing (100) in order to introduce the locking tooth (124, 134) into the recess (14).

2. Connector according to Claim 1, characterised by the fact that the housing (100) comprises a plurality of tongues (120, 130) with locking teeth (124, 134) distributed at equal intervals about the axis (101) of the housing.

3. Connector according to one of Claims 1 or 2, characterised by the fact that the housing (100) has two diametrically opposite tongues (120, 130).

4. Connector according to one of Claims 1 to 3, characterised by the fact that the protrusion provided on the locking sheath (200) is formed by an annular rib (206).

5. Connector according to one of Claims 1 to 4, characterised by the fact that each of the tongues (120, 130) has, on its external surface and in the vicinity of its free end, a hollow (126, 136) able to receive the protrusion provided on the sheath.

6. Connector according to one of Claims 1 to 5, characterised by the fact that the housing (100) has, on the rear of the tongues (120, 130), a structure forming a projection serving as an axial stop for the protrusions (206).

7. Connector according to one of Claims 1 to 6, characterised by the fact that the housing (100) and sheath (200) are produced by moulding a plastic.

8. Connector according to one of Claims 1 to 7, characterised by the fact that the housing (100) and sheath (200) are produced by moulding a polyamide.

9. Connector according to one of Claims 1 to 8, characterised by the fact that the housing (100) houses a speed sensor (150, 152).

10. Connector according to one of Claims 1 to 9, characterised by the fact that the rear end of the locking sheath (200) is provided with flutes (209).
